# FASCICULE DE BREVET EUROPEEN

(11) **EP 0 859 038 B1**
(45) Date de publication et mention de la délivrance du brevet: **23.07.2003**
(21) Numéro de dépôt: 98400221.2
(22) Date de dépôt: 03.02.1998
(51) Int. Cl.: C09D 119/00, C09D 163/08, D06M 15/55

(54) **Fibres revêtues d'une matière hydrophobe**
Hydrophobisch beschichtete Fasern
Hydrophobically coated fibers

(30) Priorité: 18.02.1997 FR 9701879
(43) Date de publication de la demande: 19.08.1998
(73) Titulaire: Atofina, 92800 Puteaux (FR)
(72) Inventeur: Flat, Jean-Jacques, 27470 Serquigny (FR); Bonnet, Evelyne, 60260 La Morlaye (FR)
(74) Mandataire: Chaillot, Geneviève

(56) Documents cités:
- EP-A- 0 244 500
- US-A- 3 864 203
- CHEMICAL ABSTRACTS, vol. 91, no. 22, 26 novembre 1979 Columbus, Ohio, US; abstract no. 176723, T KIMURA ET AL.: "Primary coating materials of optical fiber" XP002041414 & DENKI TSUSHIN KENKYUSHO KENKYO JITSUYOKA KOKOKU, vol. 27, no. 11, 1978, pages 2407-2419,
- PATENT ABSTRACTS OF JAPAN vol. 005, no. 102 (C-061), 2 juillet 1981 & JP 56 043335 A (TOHO RAYON CO LTD), 22 avril 1981,

## Description

La présente invention concerne des fibres revêtues d'une matière hydrophobe et plus particulièrement d'une matière à base d'un oligomère de polydiène époxydé.

L'art antérieur a déjà décrit des matières pour revêtir des fibres optiques, par exemple WO 9103498 et EP 166926 décrivent des formulations photoréticulables basées sur des oligomères de polybutadiène modifiés.

Ainsi, WO 9103498 décrit une formulation photoréticulable à base d'un prépolymère uréthane-acrylate obtenu par réaction d'un polybutadiène hydroxytéléchélique hydrogéné avec un diisocyanate puis avec un composé insaturé hydroxylé ; ce prépolymère étant ensuite mélangé à un diluant réactif de type acrylate d'alkyle et des photoinitiateurs de polymérisation.

EP 166926 décrit le même type de formulation photoréticulable sous irradiation UV, composée d'un oligomère uréthane-acrylate obtenu par réaction d'un polybutadiène hydroxytéléchélique d'abord chloré puis réagi avec un diisocyanate et enfin avec un composé insaturé hydroxylé, d'un diluant réactif de type acrylate d'alkyle et de photoinitiateurs.

Ces deux références revendiquent donc des formulations de revêtement de fibres optiques photoréticulables sous irradiation dans un processus de polymérisation radicalaire. Cette technique est connue par l'homme du métier comme présentant les inconvénients suivants :
- Risque de réticulation incomplète à cause de l'impossibilité de "Dark Cure", d'où des limitations des cadences des lignés industrielles
- Présence d'odeurs liées aux diluants réactifs de type acrylate d'alkyle
- Fort retrait à la polymérisation générateur de pertes d'adhérence
- Faible performance au pelage
- Inhibition de la polymérisation par l'oxygène atmosphérique.

On a maintenant trouvé un revêtement très performant pour protéger les fibres de l'humidité.

Le but de l'invention est de protéger les fibres des contraintes de l'environnement extérieur (eau, chaleur, poussière, contraintes mécaniques,...).

On obtient les fibres de l'invention en déposant par tout moyen sur des fibres existantes une composition photopolymérisable à base d'un oligomère de polydiène epoxydé qui est un polybutadiène hydroxytéléchélique époxydé sur la chaîne.

Ces fibres existantes peuvent être soit brutes, c'est-à-dire non revêtues, soit déjà revêtues d'un autre produit que celui décrit dans la présente invention.

On effectue la réticulation par photopolymérisation cationique.

L'avantage de ce procédé est qu'il est :
- compatible avec des cadences élevées
- qu'il ne présente pas d'inhibition à l'oxygène atmosphérique
- qu'il y a possibilité de "dark cure"
- qu'il donne des revêtements souples et adhérents
- qu'il est basé sur des formulations sans odeur prononcée.

Les fibres de l'invention ont aussi un comportement mécanique amélioré par rapport aux fibres de même matériau mais qui ne sont pas revêtues de la matière hydrophobe décrite dans la présente invention.

L'invention va maintenant être décrite plus en détail.

L'invention concerne tous les types de fibres, par exemple les fibres textiles, les fibres métalliques ou les fibres de verre.

S'agissant des fibres de verre on peut citer les fibres optiques ou les fibres de verre qu'on utilise par exemple pour renforcer les matériaux. Parmi les fibres textiles on peut citer les polyester, les polyamides, les polyuréthanes. Parmi les fibres métalliques on peut citer l'acier, le cuivre, l'aluminium.

Ce matériau hydrophobe qui revêt les fibres de l'invention est obtenu par photopolymérisation d'une composition comprenant au moins un oligomère de polydiène époxydé qui est un polybutadiène hydroxytéléchélique époxydé sur la chaîne, au moins un sel photoamorceur et éventuellement un diluant réactif.

L'oligomère de polydiène époxydé peut être de masse Mn comprise entre 500 et 10000 g/mole de préférence entre 1000 et 5000 g/mole. L'oligomère est epoxydé sur la chaîne. Il est fonctionnalisé en bout de chaîne par des fonctions OH . Il peut aussi être partiellement hydrogéné.

L'oligomère de polydiène epoxydé est un polybutadiène diol ayant un OH à chaque extrémité de la chaîne (hydroxytéléchélique), époxydé sur la chaîne, et comprenant, avant epoxydation, de préférence 70 à 80 %, en particulier 75 % de motifs 1,4

-CH₂-CH=CH-CH₂-

et de préférence 15 à 30 %, en particulier 25 % de motifs 1,2 ou vinyl

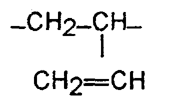

On ne sortirait pas du cadre de l'invention si en plus du diène conjugué il y avait des comonomères vinyliques ou acryliques tels le styrène et l'acrylonitrile. La quantité de fonctions époxydes de l'oligomère de polydiène époxydé peut être jusqu'à 25 % et de préférence comprise entre 1 et 8 %. Sa viscosité est avantageusement inférieure à 100 Pa.s à 30°C de préférence inférieure à 40 Pa.s à 30°C.

On peut citer les Poly Bd 600/605 de la société Elf Atochem le Poly Bd R 45 EPI de la société Idemitsu Petrochemical et les Kraton Liquid Polymer EKP 206 et 207 de la société Shell.

Les sels photoamorceurs sont des sels susceptibles de produire un acide fort sous irradiation UV afin d'amorcer la polymérisation cationique du système. A titre d'exemple, on peut citer des triarylsulfonium d'hexafluorophosphore et des triarylsulfonium d'hexafluoroantimoine.

On ne sortirait pas du cadre de l'invention en polymérisant par faisceau d'électrons.

La quantité de sel photoamorceur est fonction du nombre de fonctions époxyde et de la vitesse de polymérisation désirée.

La quantité de sel photoamorceur peut être jusqu'à 10 parties pour 100 parties de l'oligomère de polydiène epoxydé et avantageusement comprise entre 0,01 et 10 parties.

La composition à photopolymériser peut aussi comprendre un diluant réactif.

Le rôle de ce dernier est de réduire la viscosité des oligomères de polydiène époxydé et d'augmenter le taux pondéral de fonctions réactives.

On peut citer les résines époxydes suivantes :
le 3,4 époxycyclohexylméthyl 3,4' époxycyclohexanecarboxylate
l'époxyde de limonène
l'époxyde de cyclohexène
le 1,2 époxydodecane.

On peut citer des éthers vinyliques suivants :
le triéthylèneglycoldivinyléther
le 1,4 butanediolmonovinyléther
le 1,4 bis vinyloxyméthylcyclohexane.

La quantité de diluant réactif peut être jusqu'à 500 parties pour 100 parties d'oligomère de polydiène époxydé, de préférence de 0 à 200 parties.

Ces compositions peuvent aussi contenir des additifs tels que :
des solvants
des plastifiants
des tensioactifs pour améliorer le mouillage du revêtement sur le substrat
des agents d'étalement
des agents débullants
des agents matants
des agents rhéologiques
des antioxydants, anti UV pour la protection du revêtement photopolymérisé mais qui cependant ne gênent pas l'opération de photopolymérisation. On veillera à exclure de la formulation toute espèce alcaline, connue pour inhiber la polymérisation cationique.

Les fibres de l'invention ont une très bonne résistance à l'hydrolyse, de bonne propriétés mécaniques. Le revêtement a une excellente adhérence sur la fibre. La préparation de ces fibres revêtues est très simple. Elle possède les avantages de la photopolymérisation cationique, à savoir le dark cure, l'absence d'inhibition par l'oxygène atmosphérique et autorise des cadences élevées.

En particulier le revêtement de ces fibres ne flue pas contrairement aux formulations à base de graisses de pétrole.

### Exemples

On a utilisé les produits suivants :
Oligomère de polydiène époxydé :
   Poly Bd 605 : polybutadiène hydroxytéléchélique époxydé de la société Elf Atochem ayant un taux d'époxyde 5.5 à 7 % et une viscosité de 200 à 300 P à 25°C.
Sels photoamorceurs :
   FX 512 : sel photoamorceur de la société 3M de type hexafluorophosphate de triarylsulphonium.
   UVI 6974 : sel photoamorceur de la société Union Carbide de type hexafluoroantimonate de triarylsulphonium.
Diluants réactifs
   1,4 butanediol monovinyléther : éther vinylique de la société ISP.
   Cyracure UVR 6110 : Epoxy cycloaliphatique difonctionnel de la société Union Carbide.
Additifs :
   Fluorad FC 430 : Tensioactif fluoré de la société 3M
   No Air Liquid : Agent débullant de la société Barlöcher.

Ces formulations ont été réticulées sous irradiation UV grâce à un banc de photopolymérisation de type MINICURE de la société PRIMARC.

**Tableau 1 :**

| compositions et caractéristiques | | | |
|---|---|---|---|
| **COMPOSITION** | 1 | 2 | 3 |
| Poly Bd 605 | 100 | 100 | 100 |
| Cyracure UVR 6110 | 51,9 | 70 | 100 |
| Fluorad FC 430 | 0,8 | 0,8 | 0,8 |
| No Air Liquid | | 1,8 | 1,8 |
| FX512 | 6,3 | 6,8 | 8 |

| **CARACTERISTIQUES** | | | |
|---|---|---|---|
| Viscosité (30°C) (mPa.s) | 5500 | 4100 | 2900 |
| Transition vitreuse (DSC) | nd | nd | nd |
| Dureté des revêtements | | | |
| Crayon | 4B | 4B | 4B |
| Persoz | 41 σ = 0,8 | 56 σ = 1 | 82 σ = 7 |

La dureté Crayon est déterminée selon la norme ASTM D3363

La dureté Persoz est déterminée selon la norme NFT 30016.

La viscosité des formulations a été mesurée à l'aide d'un viscosimètre Brookfield DV III équipé d'une enceinte thermostatée.

La température de transition vitreuse a été mesurée par DSC lors de la seconde chauffe dans le cadre de montée en température à 10°C/min.

**Tableau 2 :**

| compositions et caractéristiques | | | |
|---|---|---|---|
| **COMPOSITION** | 4 | 5 | 6 |
| Poly Bd 605 | 100 | 85 | 76 |
| Cyracure UVR 6110 | | 15 | |
| 1,4 butanediol monovinyléther | | | 24 |
| Fluorad FC 430 | | | |
| UVI 6974 | 4 | 4 | 4 |

| **CARACTERISTIQUES** | | | |
|---|---|---|---|
| Dureté Crayon | 2H | 3H | 3H |
| Résistance à la MEK | 95 | > 100 | > 100 |

La résistance à la MEK est déterminée selon la norme ASTM D4752

**Tableau 3 :**

| caractéristiques d'adhésion | |
|---|---|
| **COMPOSITION** | **7** |
| | |
| Poly Bd 605 | 65,5 |
| Cyracure UVR 6110 | 34,5 |
| Fluorad FC 430 | 0,5 |
| FX 512 | 4 |

| **CARACTERISTIQUES** | |
|---|---|
| Adhésion sur: | |
| verre | 5/5 |
| acier | 4/5 |
| aluminium | 4/5 |

Dans le tableau 3 l'adhérence est notée de 0 à 5 selon la norme NFT 30038.

### Fibres de verre - Propriétés mécaniques des fibres

Dans ces essais, nous avons mesuré la résistance mécanique en traction de différentes fibres de verre revêtues soit seulement de leur revêtement primaire (déposé au moment du tirage de la fibre), soit, en plus du revêtement primaire, d'un revêtement de la formulation 3 du tableau 1.

**tableau 4 :**

| Contraintes à la rupture des fibres en fonction du revêtement. | |
|---|---|
| **Revêtement secondaire** | **Contrainte à la rupture (N)** |
| aucun | + |
| formulation 3 | ++ |

| | |
|---|---|
| + signifie bon | |
| ++ signifie très bon | |

## Revendications

1. Fibres revêtues d'une matière hydrophobe à base d'un oligomère de polydiène époxydé qui est un polybutadiène hydroxytéléchélique époxydé sur la chaîne.

2. Fibres selon la revendication 1, choisies parmi les fibres de verre, les fibres métalliques et les fibres textiles.

3. Fibres selon l'une des revendications 1 et 2, **caractérisées par le fait que** le polybutadiène hydroxytéléchélique époxydé sur la chaîne comprend, avant époxydation, 70 à 80% de motifs 1, 4 et 15 à 30% de motifs 1, 2.

4. Fibres selon l'une des revendications 1 à 3, **caractérisées par le fait que** le polybutadiène hydroxytéléchélique époxydé sur la chaîne a un taux d'époxy jusqu'à 25%.

5. Fibres selon la revendication 4, **caractérisées par le fait que** le taux d'époxy est compris entre 1 et 8%.

6. Fibres selon l'une des revendications 1 à 5, **caractérisées par le fait que** le revêtement résulte de la photopolymérisation d'une composition comprenant au moins un oligomère de polydiène époxydé qui est un polybutadiène hydroxytéléchélique époxydé sur la chaîne, au moins un sel photoamorceur et éventuellement un diluant réactif.

## Patentansprüche

1. Fasern, die mit einem hydrophoben Material auf Basis eines epoxidierten Polydien-Oligomers, bei dem es sich um ein an der Kette epoxidiertes hydroxytelecheles Polybutadien handelt, überzogen sind.

2. Fasern nach Anspruch 1, die unter Glasfasern, Metallfasern und Textilfasern ausgewählt sind.

3. Fasern nach Anspruch 1 oder 2, **dadurch gekennzeichnet, daß** das an der Kette epoxidierte hydroxytelechele Polybutadien vor der Epoxidation 70 bis 80% 1,4-Einheiten und 15 bis 30% 1,2-Einheiten enthält.

4. Fasern nach einem der Ansprüche 1 bis 3, **dadurch gekennzeichnet, daß** das an der Kette epoxidierte hydroxytelechele Polybutadien einen Epoxidgehalt von bis zu 25% aufweist.

5. Fasern nach Anspruch 4, **dadurch gekennzeichnet, daß** der Epoxidgehalt zwischen 1 und 8% liegt.

6. Fasern nach einem der Ansprüche 1 bis 5, **dadurch gekennzeichnet, daß** sich der Überzug aus der Photopolymerisation einer mindestens ein epoxidiertes Polydien-Oligomer, bei dem es sich um ein an der Kette epoxidiertes hydroxytelecheles Polybutadien handelt, mindestens ein Photoinitiatorsalz und gegebenenfalls ein reaktives Verdünnungsmittel enthaltenden Zusammensetzung ergibt.

## Claims

1. Fibres coated with a hydrophobic material based on an epoxidized polydiene oligomer which is a hydroxytelechelic polybutadiene epoxidized on the chain.

2. Fibres according to Claim 1, selected from glass, metal and textile fibres.

3. Fibres according to either of Claims 1 and 2, **characterized in that** the hydroxytelechelic polybutadiene epoxidized on the chain comprises, before epoxydation, from 70 to 80% of 1,4 units and form 15 to 30% of 1,2, units.

4. Fibres according to one of Claims 1 to 3, **characterized in that** the hydroxytelechelic polybutadiene epoxidized on the chain has an epoxy content of up to 25%.

5. Fibres according to Claim 4, **characterized in that** the epoxy content is between 1 and 8%.

6. Fibres according to one of Claims 1 to 5, **characterized by** the fact that the coating results from the photopolymerization of a composition comprising at least one epoxidized polydiene oligomer which is a hydroxytelechelic polybutadiene epoxidized on the chain, at least one photoinitiator salt and optionally a reactive diluent.
